# EUROPEAN PATENT APPLICATION

(11) **EP 4 772 732 A1**
(43) Date of publication of application: **08.07.2026**
(21) Application number: 24858226.4
(22) Date of filing: 02.08.2024
(51) Int. Cl.: F01N 13/00, F01N 13/14, B60K 13/04

(54) **SILENCING SYSTEM AND VEHICLE**

(30) Priority: 31.08.2023 CN 202311137795
(71) Applicant: BYD Company Limited, Shenzhen, Guangdong 518118 (CN)
(72) Inventor: LIAO, Yinsheng, Shenzhen, Guangdong 518118 (CN); SUN, Xianmeng, Shenzhen, Guangdong 518118 (CN); ZHANG, Feng, Shenzhen, Guangdong 518118 (CN); LI, Jing, Shenzhen, Guangdong 518118 (CN); TANG, Ming, Shenzhen, Guangdong 518118 (CN)
(74) Representative: Mathys & Squire
(86) International application number: PCT/CN2024/109638
(87) International publication number: WO 2025/044683

(57) **Abstract**

A muffler system and a vehicle are provided. The muffler system includes a first muffler and a gas purification apparatus, where the gas purification apparatus is disposed in the first muffler, the first muffler is provided with a first gas inlet and a first exhaust outlet, the first gas inlet is configured to receive waste gas generated by an engine, and the first exhaust outlet is configured to discharge the gas.

## Description

### CROSS-REFERENCE TO RELATED APPLICATION

This application claims priority to Chinese Patent Application No. 202311137795.6, filed with the China National Intellectual Property Administration on August 31, 2023 and entitled "Muffler System and Vehicle", the entire contents of which are incorporated herein by reference.

### TECHNICAL FIELD

The present disclosure relates to the field of muffler systems, and in particular to a muffler system and a vehicle.

### BACKGROUND

In related technologies, various components in an exhaust system need to be interconnected through exhaust pipes to form a vehicle exhaust system. Because an exhaust system extends from an engine to the rear of the vehicle, it requires a large number of components, which occupy considerable floor space. In addition, parts surrounding the exhaust system are arranged at a distance from the exhaust system to avoid heat sources, resulting in significant space waste.

### SUMMARY

An objective of the present disclosure is to provide a muffler system and a vehicle to solve the problem in the related technology that an exhaust system of a vehicle occupies a large space during arrangement and causes space waste.

A first objective of the present disclosure is to provide a muffler system, including a first muffler and a gas purification apparatus, wherein the gas purification apparatus is disposed in the first muffler, the first muffler is provided with a first gas inlet and a first exhaust outlet, the first gas inlet is configured to receive waste gas generated by an engine, and the first exhaust outlet is configured to discharge the gas.

Optionally, the first muffler includes an accommodation chamber and a noise reduction chamber, the accommodation chamber being configured to accommodate the gas purification apparatus, and the noise reduction chamber being used for noise reduction of the gas; and a first partition plate being disposed between the accommodation chamber and the noise reduction chamber.

Optionally, multiple noise reduction chambers are disposed.

Optionally, the noise reduction chamber is constructed as an expansion chamber or a Helmholtz resonance chamber.

Optionally, the noise reduction chamber includes a first chamber, and the first chamber is disposed adjacent to the accommodation chamber; and a first gas duct is disposed in the first chamber and communicates with the accommodation chamber, and a wall of the first gas duct is provided with multiple through holes.

The first partition plate is located between the first chamber and the accommodation chamber.

Optionally, the first partition plate is provided with mesh holes.

Optionally, the noise reduction chamber further includes a second chamber, and the second chamber is disposed adjacent to the first chamber; a second partition plate is disposed between the first chamber and the second chamber; and the first gas duct passes through the second partition plate to discharge the gas into the second chamber.

Optionally, the noise reduction chamber further includes a third chamber, and the third chamber is disposed adjacent to the first chamber; the second chamber and the third chamber are disposed on both sides of the first chamber, respectively; a third partition plate is disposed between the first chamber and the third chamber, the second chamber communicates with the third chamber through a second gas duct, and the second gas duct is connected between the second partition plate and the third partition plate; and
the first exhaust outlet is located in the third chamber.

Optionally, the noise reduction chamber further includes a fourth chamber, and the fourth chamber is disposed adjacent to the second chamber; and a third gas duct is disposed on a fourth partition plate between the second chamber and the fourth chamber to communicate the fourth chamber with the second chamber.

Optionally, the gas purification apparatus includes a housing, a purification member is disposed in the housing, the purification member is configured to purify the waste gas, and the housing communicates with the first gas inlet.

Optionally, the first gas inlet is formed at a position of the first muffler that is connected to the housing.

Optionally, there are multiple purification members.

Optionally, multiple purification members are spaced apart from each other.

Optionally, the multiple purification members include a first purification member and a second purification member, and the first purification member and the second purification member are arranged in a gas flow direction.

Optionally, the first muffler is provided with one or more of the following: an oxygen sensor interface, a temperature sensor interface, an EGR interface, and a differential pressure tube interface.

Optionally, the muffler system further includes a second muffler, which is mounted on the first muffler; the second muffler is provided with a second gas inlet and a third exhaust outlet; and the second gas inlet communicates with the first exhaust outlet, and the third exhaust outlet is configured to discharge the gas after noise reduction.

Optionally, the second muffler includes multiple noise reduction cavities, and the multiple noise reduction cavities are used for noise reduction of the gas, where an isolation plate is disposed between any two adjacent noise reduction cavities.

Optionally, the multiple noise reduction cavities include a first cavity, a second cavity, and a third cavity arranged sequentially.

The second muffler further includes:
a fourth gas duct, wherein one end of the fourth gas duct communicates with the second gas inlet, and the other end extends to the third cavity via the first cavity and the second cavity; and an exhaust hole is formed in a wall of a portion of the fourth gas duct that is located in the second cavity.

Optionally, the second muffler further includes a fifth gas duct communicating with and disposed between the first cavity and the third cavity, where the third exhaust outlet is located in the first cavity.

A second objective of the present disclosure is to provide a vehicle, including an engine and a muffler system according to any one of the foregoing descriptions, wherein a first muffler is mounted on the engine.

Optionally, thermal insulation cotton is disposed on one side, attached to the engine, of the first muffler.

Through the foregoing technical solution, the gas purification apparatus is directly mounted in the first muffler, the waste gas generated by the engine enters the gas purification apparatus from a first gas inlet for purification, and the purified gas is subjected to noise reduction treatment in the first muffler before being discharged. In this case, the muffler system can perform purification and noise reduction treatment simultaneously on the waste gas generated by the engine. When applied to an exhaust system of the vehicle, the muffler system can effectively reduce the number of components required in the exhaust system, reduce the volume and weight of the exhaust system, and avoid occupying a large floor space. The exhaust system can be directly integrated into an engine compartment. Further, surrounding parts no longer need to be arranged at a specific distance from the exhaust system to avoid heat sources, so that space wasting is avoided.

Other features and advantages of the present disclosure are described in detail in the following description of embodiments.

### BRIEF DESCRIPTION OF DRAWINGS

The accompanying drawings serve to provide a further understanding of the present disclosure and constitute a part of the specification, and serve to explain the present disclosure together with the following description of embodiments but not to constitute a limitation on the present disclosure. In the accompanying drawings:
FIG. 1 is a use diagram of a muffler system according to an example implementation of the present disclosure;
FIG. 2 to FIG. 5 are diagrams of structures of a muffler system according to an example implementation of the present disclosure from different perspectives;
FIG. 6 is a cross-sectional view taken along line A-A of FIG. 4;
FIG. 7 is a cross-sectional view taken along line B-B of FIG. 5;
FIG. 8 is a diagram of a structure of a second muffler according to an example implementation of the present disclosure;
FIG. 9 is a cross-sectional view taken along line C-C of FIG. 8; and
FIG. 10 is a diagram of a vehicle according to an example implementation of the present disclosure.

Reference numerals in the accompanying drawings are described as follows:
100-muffler system; 1-first muffler; 11-first exhaust outlet; 12-accommodation chamber; 13-noise reduction chamber; 131-first chamber; 132-second chamber; 133-third chamber; 134-fourth chamber; 141-first partition plate; 142-second partition plate; 143-third partition plate; 144-fourth partition plate; 1411-mesh hole; 15-first gas duct; 151-through hole; 16-second gas duct; 17-third gas duct; 200-vehicle; 2-gas purification apparatus; 21-first gas inlet; 22-second exhaust outlet; 23-housing; 24-purification member; 241-first purification member; 242-second purification member; 3-engine; 4-second muffler; 411-second gas inlet; 412-third exhaust outlet; 42-noise reduction cavity; 421-first cavity; 422-second cavity; 423-third cavity; 43-isolation plate; 44-fourth gas duct; 441-exhaust hole; 45-fifth gas duct.

### DESCRIPTION OF EMBODIMENTS

Specific implementations of the present disclosure are described in detail below with reference to the accompanying drawings. It will be understood that the specific implementations described here is for illustrative and explanatory purposes only and is not intended to limit the present disclosure.

In the present disclosure, unless otherwise stated, directional terms such as "top" and "bottom" usually refer to an orientation of a relevant component in its actual use. "Inner" and "outer" refer to inner and outer contours of a corresponding unit. In addition, when the following description refers to the accompanying drawings, unless otherwise indicated, same numbers in different accompanying drawings represent same or similar elements. The terms "first", "second", and the like used in the present disclosure are used to distinguish one element from another and do not indicate order or importance.

An exhaust system in a vehicle is mainly configured to discharge waste gas generated by an engine during operation, while reducing the pollution and noise of the discharged waste gas.

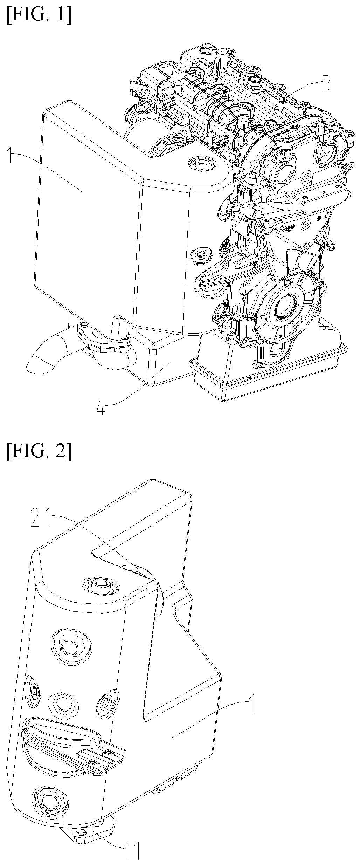

The present disclosure provides a muffler system 100, as shown in FIG. 1 to FIG. 9, including a first muffler 1 and a gas purification apparatus 2. The gas purification apparatus 2 is disposed in the first muffler 1, the first muffler 1 is provided with a first gas inlet 21 and a first exhaust outlet 11, the first gas inlet 21 is configured to receive waste gas generated by an engine 3, and the first exhaust outlet 11 is configured to discharge the gas.

Through the foregoing technical solution, the gas purification apparatus 2 is directly disposed in the first muffler 1, the waste gas generated by the engine 3 enters the gas purification apparatus 2 from the first gas inlet 21 for purification. The purified gas is subjected to noise reduction treatment in the first muffler 1 before being discharged from the first exhaust outlet 11. In this case, the muffler system can perform purification and noise reduction treatment simultaneously on the waste gas generated by the engine 3. When applied to an exhaust system of a vehicle, the muffler system can effectively reduce the number of components required in the exhaust system and avoid occupying a large floor space. The exhaust system can be directly integrated into an engine compartment. The exhaust system can be directly integrated into an engine compartment. Further, surrounding parts no longer need to be arranged at a specific distance from the exhaust system to avoid the heat source, so that space wasting is avoided.

In some implementations, the first muffler 1 may include multiple chambers, and the multiple chambers include an accommodation chamber 12 and a noise reduction chamber 13. The accommodation chamber 12 is configured to accommodate the gas purification apparatus 2, and the noise reduction chamber 13 is used for noise reduction of the gas. A first partition plate 141 is disposed between the accommodation chamber 12 and the noise reduction chamber 13. The accommodation chamber 12 for accommodating the gas purification apparatus 2 may be designed based on a shape of the gas purification apparatus 2. In addition, the partition plate can prevent multiple chambers from interfering with each other. According to some embodiments, the first partition plate 141 may be provided with mesh holes 1411 to communicate the accommodation chamber 12 with the noise reduction chamber 13. A gas in the noise reduction chamber 13 can flow into the accommodation chamber 12 (but does not enter the gas purification apparatus 2) for further noise reduction. This process is further described below.

Further, there may be multiple noise reduction chambers 13, and the multiple noise reduction chambers 13 can ensure the noise reduction effect of the first muffler 1 on the gas.

The noise reduction chamber 13 may be constructed as either an expansion chamber or a Helmholtz resonance chamber for noise reduction by using different noise reduction principles. Upon the entry of sound waves in the gas into the expansion chamber, the sound waves in the gas may generate friction with an inner wall of the expansion chamber during propagation, leading to the disruption of the sound waves and achieving noise reduction. Upon the entry of sound waves in the gas into the Helmholtz resonance chamber, the air in the Helmholtz resonance chamber may generate vibration, and resonance waves produced by air vibration interact with the sound waves in the gas to cancel each other out, thereby achieving noise reduction.

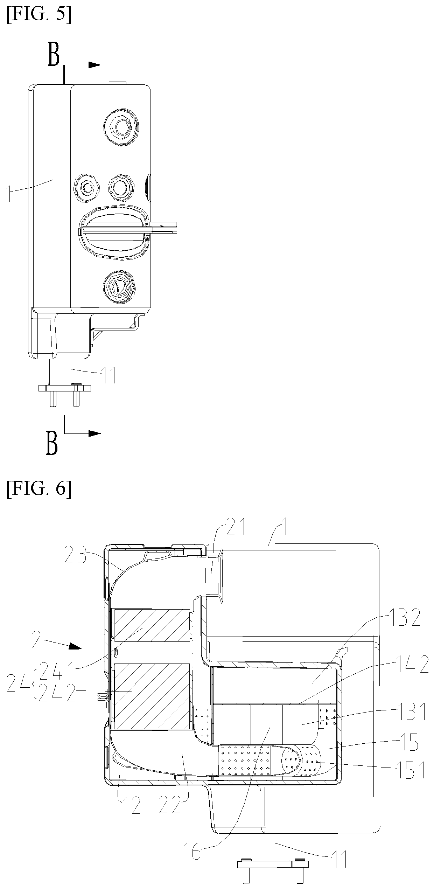

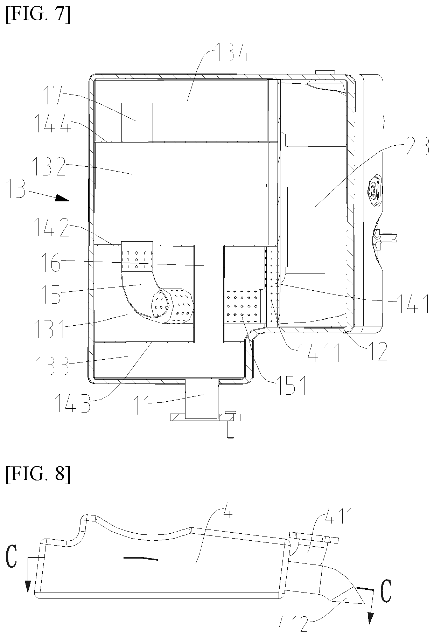

With reference to FIG. 6 and FIG. 7, the noise reduction chamber 13 may include a first chamber 131, and the first chamber 131 is disposed adjacent to the accommodation chamber 12. A first gas duct 15 is disposed in the first chamber 131 and communicates with the accommodation chamber 12. A wall of the first gas duct 15 is provided with multiple through holes 151. The first chamber 131 may serve as an expansion chamber. When the sound waves pass through the first gas duct 15, some of the sound waves may pass through the through hole 151 to enter the first chamber 131. As the first chamber 131 is closed, these sound waves may be trapped inside the first chamber 131, and noise reduction is achieved by reducing the number of sound waves in the gas. In addition, the sound waves in the first chamber 131 may generate friction with an inner wall of the first chamber 131, causing the energy of the sound waves to be dissipated. When colliding with the inner wall of the first chamber 131, the sound waves may be reflected continuously, and the sound waves may also collide with each other to cause energy dissipation of the sound waves. When two sound waves with the same frequency but opposite phases encounter each other, these two sound waves may cancel each other out, so that the sound waves trapped inside the first chamber 131 may attenuate gradually until complete dissipation. An arrangement mode, shapes, and diameters of the multiple through holes 151 are designed according to actual needs, enabling the through holes 151 to have a filtering function. When the sound waves pass through the first gas duct 15, only sound waves of a specific frequency band can pass through the through hole 151 to enter the first chamber 131. In this case, the first gas duct 15 can play a role in filtering the sound waves of the specific frequency band.

A first partition plate 141 may be located between the first chamber 131 and the accommodation chamber 12. The first partition plate 141 can prevent the first chamber 131 and the accommodation chamber 12 from interfering with each other.

In this implementation, with reference to FIG. 7, the first partition plate 141 may be provided with mesh holes 1411 to communicate the first chamber 131 with the accommodation chamber 12. In this case, the sound waves in the first chamber 131 can also pass through the mesh holes 1411 to enter the accommodation chamber 12. The sound waves may attenuate gradually in the accommodation chamber 12 until complete dissipation, so that the accommodation chamber 12 may also play a noise reduction role, and a space in the accommodation chamber 12 is utilized more reasonably. That is, in this case, the accommodation chamber 12 itself may also serve as a chamber for noise reduction, further improving the noise reduction effect of the muffler system.

In addition, the noise reduction chamber 13 may further include a second chamber 132, and the second chamber 132 is disposed adjacent to the first chamber 131. A second partition plate 142 is disposed between the first chamber 131 and the second chamber 132. The first gas duct 15 passes through the second partition plate 142 to discharge gas to the second chamber 132. The second chamber 132 may communicate with the first exhaust outlet 11 for discharging the gas. In addition, sound waves entering the second chamber 132 may generate friction with an inner wall of the second chamber 132, making energy of the sound waves dissipated. Meanwhile, when colliding with the inner wall of the second chamber 132, the sound waves may be reflected continuously, and the sound waves may also collide with each other to dissipate the energy of the sound waves. When two sound waves with the same frequency but opposite phases encounter each other, these two sound waves may cancel each other out, so that the sound waves in the gas may attenuate gradually to achieve noise reduction. In this case, the second chamber 132 may serve as an expansion chamber.

The noise reduction chamber 13 may further include a third chamber 133, and the third chamber 133 is disposed adjacent to the first chamber 131. The second chamber 132 and the third chamber 133 are disposed on both sides of the first chamber 131, respectively. A third partition plate 143 is disposed between the first chamber 131 and the third chamber 133, and the second chamber 132 communicates with the third chamber 133 through a second gas duct 16. The second gas duct 16 is connected between the second partition plate 142 and the third partition plate 143. The first exhaust outlet 11 may be located in the third chamber 133. The third chamber 133 and the second chamber 132 have the same noise reduction principle, and the third chamber 133 may also serve as the expansion chamber. The sound waves in the gas can be reduced by enabling the friction, reflection and collision of the sound waves, a flow path of the gas can be increased through the third chamber 133, thereby increasing the number of frictions, reflections, and collisions of the sound waves, aggravating the dissipation of the sound waves, and improving the noise reduction effect of the first muffler 1. In FIG. 7, the second chamber 132 communicates with the third chamber 133 via the second gas duct 16, and the second gas duct 16 passes through the first chamber 131, so that the second gas duct 16 may also be provided with a through hole 151, allowing the second gas duct 16 to play a role in filtering the sound waves of the specific frequency band.

The noise reduction chamber 13 may further include a fourth chamber 134, and the fourth chamber 134 is disposed adjacent to the second chamber 132. A third gas duct 17 is disposed on a fourth partition plate 144 between the second chamber 132 and the fourth chamber 134 to communicate the fourth chamber 134 with the second chamber 132. The fourth chamber 134 may serve as a Helmholtz resonance chamber. When the gas enters the fourth chamber 134 via the third gas duct 17, an air column in the third gas duct 17 and the gas in the fourth chamber 134 may generate vibration, and the vibration may produce resonance waves, which further interact with and cancel out the sound waves in the gas to achieve noise reduction. In FIG. 7, an opening of the third gas duct 17 is directly opposite that of the first gas duct 15, so that the gas can flow faster when entering the fourth chamber 134 via the third gas duct 17, thereby improving the noise reduction effect of the third gas duct 17 and the fourth chamber 134.

In some embodiments, the gas purification apparatus 2 may include a housing 23, and a purification member 24 is arranged in the housing 23. The purification member 24 is configured to purify the waste gas, and the housing 23 communicates with the first gas inlet 21 to receive a gas to be treated. The housing 23 can protect and fasten the purification member 24, and a vibration damping pad may be arranged in the housing 23. Applying a muffler system to an exhaust system of a vehicle is taken as an example, the vehicle may generate vibration during driving, and the sound waves may also generate vibration when colliding with an inner wall of the noise reduction chamber 13. The vibration damping pad may be used to prevent the purification members 24 from shifting or colliding with each other in the housing 23 caused by vibration. The purification member 24 here may be a structure capable of purifying waste gas, such as a three-way catalytic converter or a particulate filter.

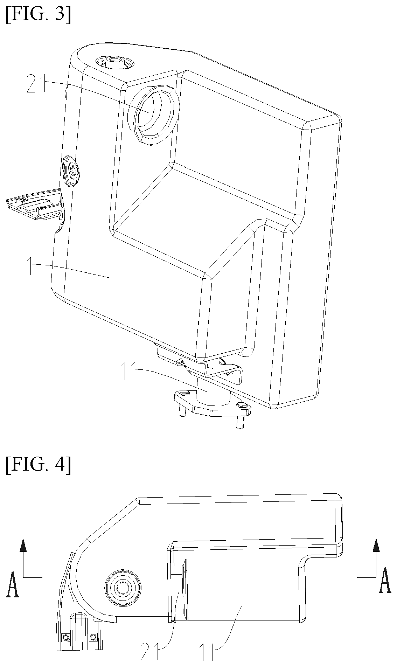

Further, the first gas inlet 21 is formed at a position of the first muffler 1 that is connected to the housing 23, so that the exhaust gas, when passing through the first muffler 1, can first enter the gas purification apparatus 2 and then undergo noise reduction. It should be noted here that "the position where the first muffler 1 is connected to the housing 23" may include the housing 23, or an outer shell structure of the first muffler 1. The first gas inlet 21 may be formed by a tail end of the housing 23 itself. For example, in FIG. 2 and FIG. 3, the first gas inlet 21 may be a gas inlet of the gas purification apparatus 2 itself, which may extend directly to the outside of the first muffler 1. A joint is formed at a portion, extending to the outside of the first muffler 1, of the gas purification apparatus 2, which is configured to communicate with a pipeline for discharging the waste gas. The first gas inlet 21 may be formed in the outer shell of the first muffler 1, and the housing 23 of the gas purification apparatus 2 is connected to this position.

The housing may be provided with a second exhaust outlet 22, wherein the second exhaust outlet 22 can discharge the gas that has undergone purification treatment but not noise reduction treatment to other positions in the first muffler 1.

Further, there may be multiple purification members 24. The multiple purification members 24 can ensure a use effect of the gas purification apparatus 2. In addition, the multiple purification members 24 can be combined with each other to perform multiple purifications on the gas. For example, there are two purification members 24, which are a three-way catalytic converter and a particulate filter, respectively.

The multiple purification members 24 may be spaced apart from each other. In this way, the multiple purification members 24 do not interfere with each other. Use effect of each purification member 24 is ensured.

The multiple purification members 24 may include a first purification member 241 and a second purification member 242, and the first purification member 241 and the second purification member 242 are arranged in a gas flow direction. That is, the waste gas passes through the first purification member 241 and then passes through second purification member 242. Taking a plane direction of FIG. 6 as an example, the first gas inlet 21 is formed in the top of the first muffler 1, and the second exhaust outlet 22 of the gas purification apparatus is formed at the bottom of the first muffler 1. At this time, the gas flow direction is from the top of the plane direction of FIG. 6 to the bottom of the plane direction of FIG. 6. The first purification member 241 and the second purification member 242 may be disposed in the same direction as the gas flow direction, that is, the first purification member 241 and the second purification member 242 are disposed from top to bottom, with the first purification member 241 disposed above the second purification member 242.

With reference to FIG. 2 to FIG. 5, the first muffler 1 may be provided with one or more of the following: an oxygen sensor interface, a temperature sensor interface, an EGR interface, and a differential pressure tube interface. When the purification member 24 is the three-way catalytic converter, the oxygen sensor can be configured to determine whether the three-way catalytic converter has failed, and the oxygen sensor may be connected to the gas purification apparatus 2 through the oxygen sensor interface. There may be two oxygen sensors, which are disposed adjacent to a gas inlet end and an exhaust end of the three-way catalytic converter, respectively. Applying a muffler system to an exhaust system of a vehicle is taken as an example, the oxygen sensor disposed at the gas inlet end can detect an oxygen content of the waste gas to determine whether fuel in the engine 3 is combusted completely. In addition, the oxygen sensor disposed at the exhaust end can detect the oxygen content of the treated waste gas. If the oxygen content detected by the oxygen sensor disposed at the exhaust end is equal to that detected by the oxygen sensor disposed at the gas inlet end, it indicates that the three-way catalytic converter has failed. The oxygen sensor at the gas inlet end may also be configured to determine an air-fuel ratio of a gas mixture used in the engine 3. If the air-fuel ratio of the gas mixture deviates from a stoichiometric air-fuel ratio, purification capacity of the three-way catalytic converter for CO, HC, and NOx drop sharply. Further, the oxygen sensor sends a detected signal to an ECU. If the air-fuel ratio of the gas mixture deviates from the stoichiometric air-fuel ratio, the ECU can adjust fuel injection quantity of a fuel injector. The increase or decrease of the fuel injection quantity may change the air-fuel ratio of the gas mixture, maintaining a concentration of the gas mixture at an ideal level. If the air-fuel ratio of the gas mixture is too low, it indicates that the fuel injection quantity is too large. If the concentration of the gas mixture increases, the combustion may be incomplete, resulting in an increase in the content of CO and other substances in the exhaust gas. The oxygen sensor at the exhaust end monitors the oxygen content in the waste gas treated by the three-way catalytic converter and feeds back a signal to the ECU to determine an operating status and efficiency of the three-way catalytic converter. If the oxygen content is not within a theoretical range, it indicates that the three-way catalytic converter has failed and needs to be replaced. In addition, the three-way catalytic converter can achieve an optimal gas purification effect within a specific temperature range. Therefore, the temperature sensor can communicate with the interior of the gas purification apparatus 2 via the temperature sensor interface to determine whether a temperature in the gas purification apparatus 2 can enable the three-way catalytic converter to reach an optimal operating condition.

When the purification member 24 is the particulate filter, the pressure sensor can be configured to determine whether the particulate filter has failed. The pressure sensor is arranged at a differential pressure tube to communicate with the gas purification apparatus 2 through a differential pressure tube structure. There may be two differential pressure tube structures, so that two pressure sensors can be provided. The two pressure sensors can be disposed adjacent to a gas inlet and an exhaust end of the particulate filter, respectively. Applying the muffler system to the exhaust system of the vehicle is taken as an example, an amount of carbon deposits in the particulate filter can be determined by detecting a pressure difference value between the gas inlet end and the exhaust end of the particulate filter. If the pressure difference value is not within a theoretical pressure difference range, the particulate filter needs to be regenerated to remove particulate matters from the particulate filter.

The EGR interface generally communicates with a pipeline in a waste gas recirculation system, a part of the waste gas generated by the engine 3 is collected and re-enters a cylinder of the engine 3 along with a fresh gas. As the waste gas includes a large amount of polyatomic gases such as carbon dioxide, and carbon dioxide and other gases are non-combustible but can absorb a large amount of heat due to their high specific heat capacity, a highest combustion temperature of the gas mixture in the cylinder can be reduced, thereby reducing the production of nitrogen oxides.

The muffler system 100 may further include a second muffler 4, and the second muffler 4 is mounted on the first muffler 1. In this case, the first muffler 1 plays a main role in noise reduction and can serve as a main muffler; while the second muffler 4 serves as a secondary muffler to assist the first muffler 1 in noise reduction, thereby ensuring further improvement in noise reduction effect. The second muffler 4 is provided with a second gas inlet 411 and a third exhaust outlet 412. The second gas inlet 411 communicates with the first exhaust outlet 11, and the third exhaust outlet 412 is configured to discharge the gas after noise reduction. The second muffler 4 can increase the flow path of the gas, thereby increasing the number of frictions, reflections and collisions of sound waves, aggravating dissipation of the sound waves, and improving the noise reduction effect of the muffler system. In addition, the second muffler 4 is directly mounted on the first muffler 1, which can further facilitate the arrangement and mounting of the muffler system while ensuring the noise reduction effect of the muffler system.

The second muffler 4 may further include multiple noise reduction cavities 42, and the multiple noise reduction cavities 42 are used for noise reduction of the gas. An isolation plate 43 is disposed between any two adjacent noise reduction cavities 42. The multiple noise reduction cavities 42 can achieve noise reduction through different noise reduction principles, and the isolation plate 43 can prevent the multiple cavities from interfering with each other.

In the present disclosure, the multiple noise reduction cavities 42 in the second muffler 4 may include a first cavity 421, a second cavity 422, and a third cavity 423 arranged in sequence, for details, reference may be made to FIG. 8. The second muffler 4 may further include a fourth gas duct 44, one end of the fourth gas duct 44 communicates with the second gas inlet 411, and the other end extends to the third cavity 423 via the first cavity 421 and the second cavity 422. An exhaust hole 441 is formed in a wall of a portion of the fourth gas duct 44 that is located in the second cavity 422. The wall of the fourth gas duct 44 is provided with multiple exhaust holes 441. When sound waves pass through the fourth gas duct 44, some of the sound waves may enter the second cavity 422 after passing through the through hole 151. As the second cavity 422 is closed, these sound waves are trapped inside the second cavity 422, so that the noise reduction can be achieved by reducing the number of sound waves in the gas. In addition, the sound waves in the second cavity 422 may generate friction with an inner wall of the second cavity 422, making energy of the sound waves dissipated. When colliding with the inner wall of the second cavity 422, the sound waves may be reflected continuously, and the sound waves may also collide with each other to dissipate the energy of the sound waves. When two sound waves with the same frequency but opposite phases encounter, these two sound waves may cancel each other out, so that the sound waves trapped inside the second cavity 422 may attenuate gradually until complete dissipation. The arrangement, shapes, and diameters of the multiple exhaust holes 441 can be designed according to actual needs, enabling the exhaust hole 441 to have a filtering function. When the sound waves pass through the fourth gas duct 44, only sound waves of a specific frequency band can pass through the through hole 151 to enter the second cavity 422. In this case, the fourth gas duct 44 can play a role in filtering the sound waves of the specific frequency band.

In addition, the second muffler 4 may further include a fifth gas duct 45, the fifth gas duct 45 communicates with and is disposed between the first cavity 421 and the third cavity 423, where the third exhaust outlet 412 is located in the first cavity 421. In this case, the gas entering the second muffler 4 can enter the third cavity 423 via the fourth gas duct 44, the fifth gas duct 45 communicates with the first cavity 421, the gas is discharged through the third exhaust outlet 412, and sound waves entering the third cavity 423 and the first cavity 421 may generate friction with inner walls of the third cavity 423 and the first cavity 421, making the energy of the sound waves dissipated. In addition, when colliding with the inner walls of the third cavity 423 and the first cavity 421, the sound waves are reflected continuously, and the sound waves may collide with each other to dissipate the energy of the sound waves. When two sound waves with the same frequency but opposite phases meet, the two sound waves can cancel each other out to reduce the sound waves in the gas, thereby achieving noise reduction.

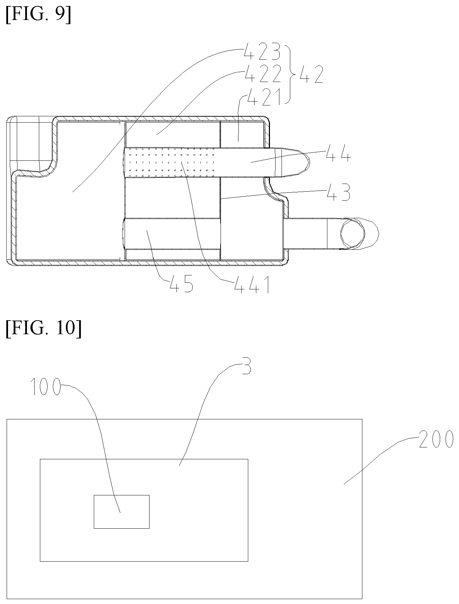

With reference to FIG. 10, a second aspect of the present disclosure is to provide a vehicle 200, including an engine 3 and the muffler system 100 according to any of the foregoing implementations. The vehicle has all beneficial effects of the foregoing muffler system and is not described in detail here. The first muffler 1 is mounted on the engine 3. A mounting bracket connected to the engine 3 may be correspondingly disposed on the first muffler 1, so that the first muffler 1 can be detachably mounted on the engine 3 to facilitate the mounting and dismounting of the muffler system 100. In addition, one side, attached to the engine 3, of the first muffler 1 can conform to the shape of the engine 3, thereby saving more mounting space.

Thermal insulation cotton is disposed on one side, attached to the engine 3, of the first muffler system 1. Further, a periphery of the first muffler 1 may be entirely wrapped with the thermal insulation cotton. As the waste gas discharged from the engine 3 has a high temperature, the temperature of the muffler system 100 may be high. The thermal insulation cotton can reduce heat transfer and prevent the temperature of the muffler system 100 from interfering with the engine 3 and other parts in an engine compartment.

Preferred implementations of the present disclosure are described in detail above with reference to the accompanying drawings. However, the present disclosure is not limited to specific details in the foregoing implementations. Within the technical concept of the present disclosure, various simple modifications can be made to the technical solution of the present disclosure, and these simple modifications all fall within the scope of protection of the present disclosure. It will also be noted that the various specific technical features described in the foregoing implementations can be combined in any suitable manner, provided that there is no contradiction. To avoid unnecessary repetition, the present disclosure does not provide separate descriptions for all possible combination modes.

In addition, various different implementations of the present disclosure can also be combined arbitrarily, provided that they do not violate the principles of the present disclosure, and should also be considered as the content disclosed by the present disclosure.

## Claims

1. A muffler system (100), comprising a first muffler (1) and a gas purification apparatus (2), the gas purification apparatus (2) being disposed in the first muffler (1), the first muffler (1) being provided with a first gas inlet (21) and a first exhaust outlet (11), the first gas inlet (21) being configured to receive waste gas generated by an engine (3), and the first exhaust outlet (11) being configured to discharge the gas.

2. The muffler system (100) according to claim 1, wherein the first muffler (1) comprises an accommodation chamber (12) and a noise reduction chamber (13), the accommodation chamber (12) is configured to accommodate the gas purification apparatus (2), the noise reduction chamber (13) is used for noise reduction of the gas, and a first partition plate (141) is disposed between the accommodation chamber (12) and the noise reduction chamber (13).

3. The muffler system (100) according to claim 2, wherein there are a plurality of noise reduction chambers (13).

4. The muffler system (100) according to claim 2 or 3, wherein the noise reduction chamber (13) is constructed as an expansion chamber or a Helmholtz resonance chamber.

5. The muffler system (100) according to any one of claims 2 to 4, wherein the noise reduction chamber (13) comprises a first chamber (131), the first chamber (131) is disposed adjacent to the accommodation chamber (12); a first gas duct (15) is disposed in the first chamber (131) and communicates with the accommodation chamber (12), and a wall of the first gas duct (15) is provided with a plurality of through holes (151).

6. The muffler system (100) according to claim 5, wherein the first partition plate (141) is located between the first chamber (131) and the accommodation chamber (12).

7. The muffler system (100) according to any one of claims 2 to 6, wherein the first partition plate (141) is provided with mesh holes (1411).

8. The muffler system (100) according to claim 5 or 6, wherein the noise reduction chamber (13) further comprises a second chamber (132), the second chamber (132) is disposed adjacent to the first chamber (131); a second partition plate (142) is disposed between the first chamber (131) and the second chamber (132), and the first gas duct (15) passes through the second partition plate (142) to discharge the gas to the second chamber (132).

9. The muffler system (100) according to claim 8, wherein the noise reduction chamber (13) further comprises a third chamber (133), the third chamber (133) is disposed adjacent to the first chamber (131); the second chamber (132) and the third chamber (133) are disposed on both sides of the first chamber (131), respectively, a third partition plate (143) is disposed between the first chamber (131) and the third chamber (133), the second chamber (132) communicates with the third chamber (133) through a second gas duct (16), and the second gas duct (16) is connected between the second partition plate (142) and the third partition plate (143); and
the first exhaust outlet (11) is located in the third chamber (133).

10. The muffler system (100) according to claim 8 or 9, wherein the noise reduction chamber (13) further comprises a fourth chamber (134), and the fourth chamber (134) is disposed adjacent to the second chamber (132); a third gas duct (17) is disposed on a fourth partition plate (144) between the second chamber (132) and the fourth chamber (134) to communicate the fourth chamber (134) with the second chamber (132).

11. The muffler system (100) according to any one of claims 1 to 10, wherein the gas purification apparatus (2) comprises a housing (23), a purification member (24) is disposed in the housing (23), the purification member (24) is configured to purify the waste gas, and the housing (23) communicates with the first gas inlet (21).

12. The muffler system (100) according to claim 11, wherein the first gas inlet (21) is formed at a position of the first muffler (1) that is connected to the housing (23).

13. The muffler system (100) according to claim 11 or 12, wherein there are a plurality of purification members (24).

14. The muffler system (100) according to claim 13, wherein the plurality of the purification members (24) are spaced apart from each other.

15. The muffler system (100) according to claim 13 or 14, wherein the plurality of purification members (24) comprise a first purification member (241) and a second purification member (242), and the first purification member (241) and the second purification member (242) are arranged in a gas flow direction.

16. The muffler system (100) according to any one of claims 1 to 15, wherein the first muffler (1) is provided with one or more of the following: an oxygen sensor interface, a temperature sensor interface, an EGR interface, and a differential pressure tube interface.

17. The muffler system (100) according to any one of claims 1 to 16, wherein the muffler system (100) further comprises a second muffler (4), the second muffler (4) is mounted on the first muffler (1) and is provided with a second gas inlet (411) and a third exhaust outlet (412), the second gas inlet (411) communicates with the first exhaust outlet (11), and the third exhaust outlet (412) is configured to discharge the gas after noise reduction.

18. The muffler system (100) according to claim 17, wherein the second muffler (4) comprises a plurality of noise reduction cavities (42), and the plurality of noise reduction cavities (42) are used for noise reduction of the gas; and an isolation plate (43) is disposed between any two adjacent noise reduction cavities (42).

19. The muffler system (100) according to claim 18, wherein the plurality of noise reduction cavities (42) comprise a first cavity (421), a second cavity (422), and a third cavity (423) arranged in sequence; and
the second muffler (4) further comprises:
a fourth gas duct (44), one end of the fourth gas duct (44) communicating with the second gas inlet (411), the other end extending to the third cavity (423) via the first cavity (421) and the second cavity (422), and an exhaust hole (441) being formed in a wall of a portion of the fourth gas duct (44) that is located in the second cavity (422).

20. The muffler system (100) according to claim 19, wherein the second muffler (4) further comprises a fifth gas duct (45), the fifth gas duct (45) communicates with and is disposed between the first cavity (421) and the third cavity (423), and the third exhaust outlet (412) is located in the first cavity (421).

21. A vehicle (200), comprising an engine (3) and the muffler system (100) according to any one of claims 1 to 20, a first muffler (1) being mounted on the engine (3).

22. The vehicle (200) according to claim 21, wherein thermal insulation cotton (5) is disposed on one side, attached to the engine (3), of the first muffler (1).
